**Europäisches Patentamt**

**European Patent Office**

**Office européen des brevets**

(19)

(11) Numéro de publication: **0 305 232 B1**

(12) **FASCICULE DE BREVET EUROPEEN**

(45) Date de publication du fascicule du brevet:
31.10.90

(51) Int. Cl.⁵: **F16L 23/04**

(21) Numéro de dépôt: **88401852.4**

(22) Date de dépôt: **18.07.88**

(54) Collier de serrage pour le raccordement de deux tubes métalliques.

(30) Priorité: **30.07.87 FR 8710844**

(43) Date de publication de la demande:
**01.03.89 Bulletin 89/9**

(45) Mention de la délivrance du brevet:
**31.10.90 Bulletin 90/44**

(84) Etats contractants désignés:
**AT BE CH DE ES FR GB GR IT LI LU NL SE**

(56) Documents cités:
**FR-A- 1 031 767**
**US-A- 2 693 380**
**US-A- 3 964 773**

(73) Titulaire: **Etablissements CAILLAU, 28, rue Ernest Renan, F-92130 Issy-les-Moulineaux(FR)**

(72) Inventeur: **Calmettes, Lionel, 84, Faubourg d'Orléans, F-41200 Romorantin(FR)**
Inventeur: **André, Michel, 140 rue du 8 Mai, F-41200 Romorantin(FR)**

(74) Mandataire: **Descourtieux, Philippe et al, CABINET BEAU de LOMENIE 55 rue d'Amsterdam, F-75008 Paris(FR)**

## Description

On sait que le raccordement étanche de deux tubes métalliques présente souvent des difficultés, notamment si l'on impose une légèreté aussi grande que possible et une rapidité de mise en oeuvre des moyens de raccordement. C'est en particulier le cas dans la construction automobile lorsqu'il s'agit de réaliser un conduit d'échappement de moteur au moyen de plusieurs tronçons de tubes métalliques.

A cet effet, on a déjà proposé, par exemple dans le brevet US-A-3.964.773, de conformer les extrémités en regard des tubes à raccorder de façon qu'elles présentent des surfaces d'appui complémentaires, généralement de forme conique. Un collier de serrage est disposé autour de ces surfaces coniques, qui font saillie par rapport à la surface extérieure des tubes, pour les maintenir appliquées l'une sur l'autre en assurant aussi bien l'étanchéité du raccordement que la rigidité mécanique nécessaire.

Un tel collier comporte deux éléments semi-circulaires, dont la section est en forme de V inversé pour venir coiffer les surfaces coniques saillantes des tubes.

Chaque élément semi-circulaire est muni à ses extrémités de brides, elles-mêmes susceptibles d'être assemblées les unes aux autres au moyen de vis ou de boulons. Dans le cas particulier du brevet américain précité, les éléments semi-circulaires présentent, à l'une de leurs extrémités, de moyens de liaison articulée permettant l'utilisation d'un seul boulon pour effectuer le serrage du collier.

La mise en place de ce genre de collier est relativement longue puisqu'il est souvent nécessaire de prévoir au moins deux boulons à assembler et à serrer. En outre, les forces de serrage sont mal utilisées, et surtout mal réparties, puisqu'elles tendent à rapprocher l'un de l'autre les deux éléments semi-circulaires, relativement rigides, sans exercer une tension uniformément répartie sur leur périphérie.

On signalera également le brevet FR-A-1.031.767 qui propose le raccordement étanche de tubes d'aération de grand diamètre au moyen d'un agencement et d'un collier de serrage analogues à ceux qui viennent d'être rappelés. On soulignera cependant que ce brevet français exige l'utilisation de "brides de renforcement" disposées à cheval sur les extrémités coniques des tubes à raccorder, ce qui rend pratiquement impossible l'application de son enseignement au raccordement des tubes constituant le conduit d'échappement d'un moteur de véhicule.

Enfin, il faut noter que les dispositifs et agencements qui viennent d'être sommairement rappelés exigent en général un joint d'étanchéité, en caoutchouc ou analogue, disposé entre les surfaces d'appui complémentaires des tubes. La présence d'un tel joint rend évidemment plus difficile et plus délicat le raccordement des tubes, surtout s'il s'agit d'une fabrication en grande série; elle est, d'autre part, une source d'inconvénients dus aux risques de détérioration du joint par des gaz chauds et agressifs.

L'invention a pour objet un collier perfectionné du genre qui vient d'être sommairement décrit et permettant un raccordement étanche facile et rapide de deux tubes métalliques, la bonne étanchéité du raccordement étant obtenue grâce, notamment, à une utilisation améliorée des forces de serrage. Destiné en particulier à la construction automobile, un tel collier est relativement léger et sa mise en place est facile, qu'il s'agisse de la "première monte" en usine, ou de la "seconde monte" des pièces de rechange.

Toutefois, avant d'exposer les moyens proposés par l'invention pour obtenir les résultats recherchés, il convient encore de signaler l'existence du brevet US-A-2.693.380. Ce document propose un collier permettant uniquement de maintenir, dans le sens axial, l'assemblage de deux organes entraînés en rotation l'un par l'autre. A cet effet, le collier est constitué par un anneau ouvert, dont la section est en forme de V inversé. Ce collier est disposé à cheval sur les flancs coniques d'éléments massifs fixés sur les organes entraînés en rotation. Il est essentiel que ce collier ne soit pas soumis à des efforts de torsion.

Pour maintenir l'assemblage dans le sens axial des deux organes, sa section en V inversé est rendue indéformable au moyen de disques de renforcement qui ne nuisent pas à la nécessaire souplesse du collier dans le sens périphérique au moment de sa mise en place.

On peut ainsi résumer l'art antérieur de la technique en indiquant que l'on connaît déjà un collier de serrage pour le raccordement étanche de deux tubes métalliques, notamment de ceux constituant le conduit d'échappement du moteur d'un véhicule, les extrémités en regard des deux tubes à raccorder présentant des surfaces d'appui complémentaires de forme conique faisant saillie par rapport, à la surface extérieure cylindrique des tubes, le collier comportant lui-même un anneau ouvert dont la section est en forme de V inversé, et dont les extrémités comportent des pattes d'appui pour des moyens de serrage, s'étendant radialement jusqu'au voisinage de la périphérie interne de l'anneau.

Il est alors possible de préciser les caractéristiques du collier perfectionné permettant d'obtenir les résultats indiqués plus haut.

Selon l'invention l'anneau est déformable pour appliquer fortement l'une contre l'autre les surfaces d'appui complémentaires de forme conique des tubes. Les moyens de serrage et de maintien de l'anneau en position fermée sont constitués, de façon connue en soi, par un ensemble vis et écrou, la tête de la vis présentant sur sa périphérie, une découpe en forme de V correspondant à la section de l'anneau de façon à prendre appui sur une première patte au moins dans la zone de raccordement de celle-ci avec l'anneau, cependant qu'il est prévu, entre l'écrou et la seconde patte, une butée de forme analogue à celle de la tête de la vis, montée coulissante sur la vis, et destinée à prendre appui sur cette seconde patte au moins dans sa zone de raccordement avec l'anneau.

L'invention sera mieux comprise et ses caractéristiques secondaires ainsi que ses avantages apparaîtront au cours de la description qui va suivre d'un exemple de réalisation.

A cet effet, on se référera aux dessins annexés dans lesquels:

– la figure 1 est une vue en perspective d'un collier de serrage selon l'invention.

- La figure 2 est une vue d'un collier selon la figure 1 monté et serré sur deux tubes à raccorder.

- La figure 3 est une vue partielle suivant la flèche F de la figure 2.

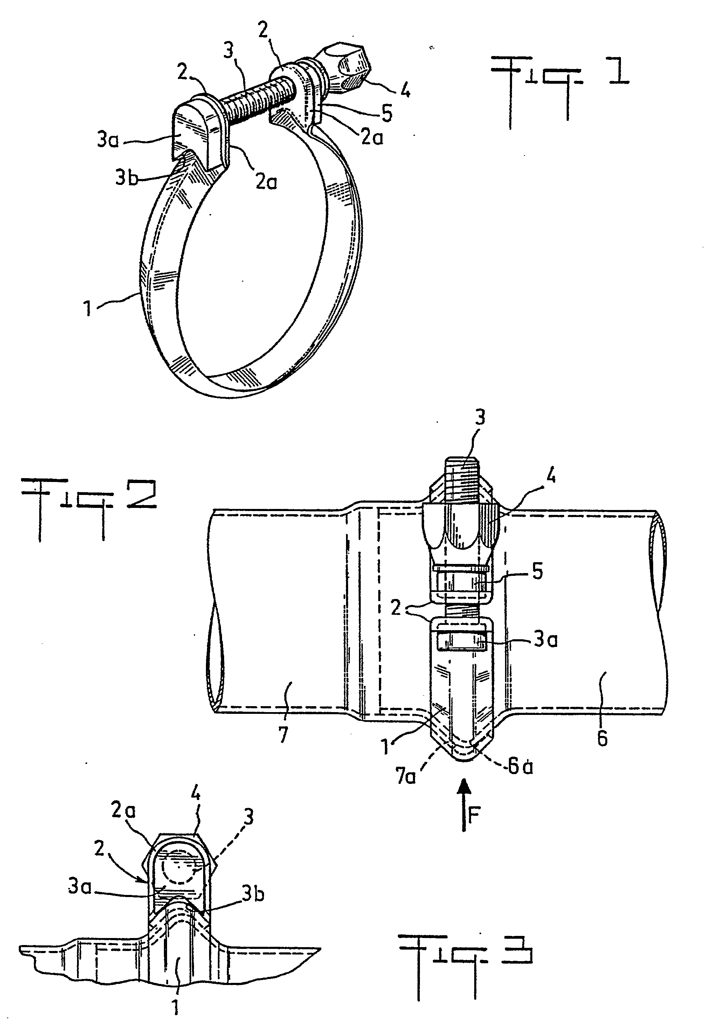

Si l'on se reporte tout d'abord à la figure 1, on voit un collier constitué par un anneau métallique (1), ouvert, dont la section transversale est en forme de V inversé. Un tel collier est généralement fabriqué par pliage et formage d'une tôle plane. L'épaisseur de cette tôle est déterminée essentiellement pour assurer une résistance convenable aux efforts de traction qui seront appliqués au collier au cours de son serrage. Ainsi qu'on le verra plus loin, il n'est aucunement nécessaire - et peut-être même nuisible - d'augmenter cette épaisseur et, par suite, la rigidité du collier.

A chacune de ses extrémités libres, l'anneau ouvert présente une patte (2) repliée radialement vers l'extérieur du collier. On conçoit immédiatement que le collier sera façonné de sorte que, dans sa position fermée - c'est-à-dire lorsque les deux pattes (2) sont appliquées l'une contre l'autre, ou tout au moins fortement rapprochées l'une de l'autre -, son diamètre extérieur corresponde à celui des surfaces coniques saillantes des tubes à raccorder (figure 2).

Les pattes (2) constituent des zones d'appui pour des organes complémentaires permettant le serrage et le maintien de l'anneau dans sa position fermée. Dans l'exemple représenté, les organes complémentaires sont constitués par l'ensemble connu d'une vis (3) et d'un écrou (4) et, bien entendu, les pattes (2) présentent des perçages permettant le passage de la tige filetée de la vis.

Toutefois, ainsi qu'on le voit bien sur les figures, les pattes (2) sont raidies par un rebord (2a) qui délimite ainsi un logement, d'une part pour la tête massive (3a) de la vis, d'autre part pour une butée (5), montée coulissante sur la vis, l'écrou (4) venant prendre appui sur cette butée coulissante.

On soulignera encore que la tête (3a) de la vis présente, sur sa périphérie, une découpe (3b) en V, correspondant à la section de l'anneau (1), de sorte que la zone d'appui de la tête (3a) sur la patte (2) correspondante s'étend au moins jusqu'à la zone de raccordement de cette patte avec l'anneau (1). La butée (5), elle-même massive, présente une forme identique à celle de la tête (3a) de la vis et prend appui sur l'autre patte (2), au moins dans la zone de raccordement avec l'anneau (1).

Pour des raisons qui apparaîtront plus loin, il est avantageux que le perçage de la butée (5) permettant le passage de la tige filetée de la vis (3) présente un diamètre aussi voisin que possible du diamètre extérieur du filet de la vis, permettant ainsi à la face d'appui de la butée (5) sur la patte (2) correspondante d'être toujours perpendiculaire à l'axe de la vis.

Bien entendu, une rondelle connue peut enfin être disposée entre l'écrou (4) et la butée (5).

Si l'on se reporte maintenant aux figures 2 et 3, on comprend que le collier a tout d'abord été placé dans sa position ouverte, au-dessus de la zone de raccordement des deux tubes (6) et (7), de façon que sa gorge intérieure vienne coiffer les surfaces coniques saillantes (6a) et (7a) des tubes. Ainsi qu'on le sait, la surface saillante (6a) comporte, en fait, deux flancs coniques, tandis que la surface terminale (7a) ne comporte qu'un flanc conique destiné à s'appliquer sur l'un des flancs de la surface (6a). La vis (3) est alors engagée successivement dans les perçages des pattes (2) jusqu'à ce que sa tête (3a) soit disposée dans le logement de la patte (2) correspondante où elle se trouve immobilisée en rotation, sa découpe en V (3b) venant coiffer l'anneau (1). De même, la butée (5), peu visible sur la figure 2, est engagée sur la tige filetée jusqu'à ce qu'elle atteigne l'autre patte (2) et que sa découpe en V vienne coiffer l'anneau (1), d'une façon tout à fait symétrique à la tête de la vis. Il est alors possible de procéder au serrage du collier au moyen de l'écrou (4). Au cours de cette opération, le diamètre de l'anneau diminue régulièrement et, si nécessaire, la forme en V de sa section se modifie légèrement, de sorte que les flancs coniques en regard des surfaces saillantes des tubes (6) et (7) sont fortement appliqués l'un sur l'autre, assurant à la fois l'étanchéité recherchée et une parfaite liaison mécanique des tubes.

A cet égard, on soulignera qu'il est avantageux que l'angle intérieur de la section en V inversé du collier soit notablement inférieur, par exemple d'au moins 10°, à l'angle formé par les flancs coniques en V inversé des surfaces saillantes (6a) et (7a) des tubes. Par exemple, si l'angle des flancs coniques en V inversé des surfaces saillantes (6a) et (7a) des tubes est voisin de 90°, l'angle intérieur de la section en V inversé du collier pourra lui-même être voisin de 65°. Dans ce cas, si le diamètre des tubes est voisin de 50 mm, on a pu déterminer qu'une étanchéité convenable du raccordement est obtenue par l'application d'un couple de serrage voisin de 3 m.DaN sur l'écrou (4), si la tige filetée de la vis (3) présente un diamètre de 10 mm et un pas égale à 1,5 mm.

D'autre part, ainsi qu'on le voit bien sur les figures 2 et 3, les flancs coniques de l'anneau (1) ont des dimensions suffisamment faibles pour que leur périphérie interne ne puisse atteindre la zone de raccordement de la partie cylindrique des tubes et des surfaces saillantes (6a) et (7a). Cela permet d'appliquer fortement les flancs coniques en regard des surfaces saillantes, notamment au voisinage de leur périphérie externe, dans la région du sommet du V inversé de l'anneau (1).

On notera enfin que le collier selon l'invention, grâce à sa déformation régulière au cours du serrage, permet d'obtenir un couple résistant très élevé entre les deux tubes. Cela est dû en particulier au fait que les forces de serrage provoquées par l'ensemble vis-écrou s'exercent directement sur l'anneau, grâce à la forme particulière de la tête (3a) de la vis et de la butée (5) dues à la présence des découpes en V. Ces dernières, ainsi que l'absence de jeu entre la vis et la butée coulissante évitent la déformation des pattes (2) sous l'effet du serrage. Le serrage peut ainsi être poursuivi jusqu'à ce que l'anneau du collier soit complètement ou pratiquement fermé, c'est-à-dire jusqu'à ce que les pattes (2) soient appliquées l'une contre l'autre ou au voisinage immédiat l'une de l'autre.

## Revendications

Collier de serrage pour le raccordement étanche de deux tubes métalliques, notamment de ceux constituant le conduit d'échappement du moteur d'un véhicule, les extrémités en regard des deux tubes à raccorder présentant des surfaces d'appui complémentaires de forme conique faisant saillie par rapport à la surface extérieure cylindrique des tubes, le collier comportant lui-même un anneau ouvert dont la section est en forme de V inversé, et dont les deux extrémités comportent des pattes d'appui pour des moyens de serrage, s'étendant radialement jusqu'au voisinage de la périphérie interne de l'anneau, caractérisé en ce que l'anneau est déformable pour appliquer fortement l'une contre l'autre les surfaces d'appui complémentaires de forme conique des tubes, et en ce que les moyens de serrage et de maintien de l'anneau en position fermée sont constitués, de façon connue en soi, par un ensemble vis et écrou (3–4), la tête (3a) de la vis présentant, sur sa périphérie, une découpe (3b) en forme de V correspondant à la section de l'anneau de façon à prendre appui sur une première patte (2) au moins dans la zone de raccordement de celle-ci avec l'anneau (1), cependant qu'il est prévu, entre l'écrou (4) et la seconde patte (2), une butée (5) de forme analogue à celle de la tête de la vis, montée coulissante sur la vis, et destinée à prendre appui sur cette seconde patte, au moins dans sa zone de raccordement avec l'anneau.

## Patentansprüche

Klemmschelle zur dichten Verbindung zweier Metallrohre, insbesondere solcher, die die Auspuffleitung eines Kraftfahrzeugs bilden, wobei die zueinanderschauenden Enden der beiden zu verbindenden Rohre komplementäre Auflageflächen mit konischer Form aufweisen, die in bezug auf die zylindrische Außenfläche der Rohre vorstehen, welche Schelle selbst einen offenen Ring umfaßt, der im Schnitt die Gestalt eines umgekehrten V hat und dessen beide Enden Auflagepratzen für Klemmittel aufweisen, die sich radial bis in die Nähe des Innenumfanges des Ringes erstrecken, dadurch gekennzeichnet, daß der Ring zwecks festen Aneinanderpressens der komplementären konischen Auflageflächen der Rohre verformbar ist, und daß die Klemm- und Haltemittel des Ringes in geschlossener Position auf an sich bekannte Weise durch eine Schrauben-Mutter-Einheit (3–4) gebildet sind, wobei der Kopf (3a) der Schraube an seinem Umfang einen V-förmigen Einschnitt (3b) entsprechend dem Querschnitt des Ringes aufweist, so daß er auf einer ersten Pratze (2) zumindest in der Verbindungszone derselben mit dem Ring (1) zur Anlage kommt, wobei zwischen der Mutter (4) und der zweiten Pratze (2) ein Anschlag (5) von zum Kopf der Schraube analoger Gestalt vorgesehen ist, welcher an der Schraube gleitend montiert ist und, zumindest in der Verbindungszone zwischen der zweiten Pratze und dem Ring, mit diesem zweiten Pratze zur Anlage gelangen soll.

## Claims

Clamp for tightly joining two metal pipes, such as the pipes constituting the exhaust system of a vehicle engine, the ends in facing relationship of the two pipes to be joined having complementary bearing surfaces of conical shape which project with respect to the outer cylindrical surface of the pipes, the clamp being itself provided with the one open ring of inverted V-shaped cross-section and of which the two ends comprise bearing elements for tightening means, which elements extend radially to close to the internal periphery of the ring, characterized in that the ring is deformable in order to apply the conical shape complementary bearing surfaces of the pipes firmly against each other and in that the means used for tightening and holding the ring in closed position are constituted, in manner known per se, by a nut and bolt system (3–4), the head (3a) of the bolt having, on its periphery a V-cut groove (3b) which corresponds to the cross-section of the ring, so as to rest against a first lug (2) at least in the zone in which said lug is joined with the ring (1), whereas an abutment (5) is provided between the nut (4) and the second lug (2), said abutment being of similar shape to that of the bolt head, being slidably mounted on the bolt, and being adapted to rest against said second lug at least in joining zone with the ring.

EP 0 305 232 B1

Fig 1

Fig 2

Fig 3